# EUROPEAN PATENT APPLICATION

(11) **EP 0 810 389 A1**
(43) Date of publication of application: **03.12.1997**
(21) Application number: 97303622.1
(22) Date of filing: 28.05.1997
(51) Int. Cl.: F16F 15/36, F16F 9/00, C10M 101/00

(54) **Balancing device**

(30) Priority: 29.05.1996 KR 9618604; 09.01.1997 KR 9700350
(71) Applicant: Samsung Electronics Co., Ltd., Suwon City, Kyungki-do (KR)
(72) Inventor: Lee, Joon Yeop, Chung-gu, Seoul (KR)
(74) Representative: Read, Matthew Charles

(57) **Abstract**

A balancing device for compensating for imbalanced rotation of a rotary body (4) is disclosed and comprises an annular chamber (13) fixed relative to the body (4) and concentric therewith and counterbalance means (33) arranged to move in the chamber (13) in a damping fluid (35) having a predetermined viscosity, towards a counterbalancing position in response to imbalanced rotation of the body (4). The damping fluid (35) contains an additive for reducing temperature dependent variations in the predetermined viscosity of the damping fluid (35).

## Description

The present invention relates to a balancing device for compensating for imbalanced rotation of a rotary body comprising an annular chamber fixed relative to the body concentric therewith and counterbalance means arranged to move in the chamber, in a damping fluid having a predetermined viscosity, towards a counterbalancing position in response to imbalanced rotation of the body.

A rotative body such as a an automobile wheel is generally provided with a balancer for maintaining static and dynamic balances with respect to its rotation. Dynamic balancer's which compensate for a dynamic unbalance generated due to an external force of an internal load variation are known from US-A-5048367, US-A-4674356 and US-A-2687918. These documents disclose a balancer concentrically mounted with the rotational axis of a rotative body to maintain its dynamic or rotational balance and thereby decrease vibration and noise.

It is also known to provide the spin basket of a washing machine, with a balancer for maintaining its dynamic balance. When the spin basket rotates in an unbalanced state due to an uneven distribution of laundry therein, the balancer compensates for the unbalanced rotation to maintain the rotational balance of the spin basket.

A balancer for a washing machine of the type described above is disclosed in US-A-4433592 and classifies the balancers into three different types, namely solid, liquid and ball balancers.

The solid balancer has a balancing member fixed to the inner wall of a spin basket which increases the moment of inertia of the spin basket to decrease vibration generated due to an uneven distribution of laundry therein.

The liquid balancer has a liquid filled annular casing mounted concentrically with respect to the spin basket. The liquid moves to a counterbalance position to oppose the unbalanced rotation of the spin basket and thereby decrease vibration and noise.

Both solid and liquid balancers are limited in their ability to effectively decrease vibration of the spin basket, especially in the case of the liquid balancer, in which it is also necessary to prevent leakage of the liquid when a liquid of low viscosity is used such as, for example, salt water.

In view of the aforementioned problems, a ball balancer having a superior vibration damping effect is widely used.

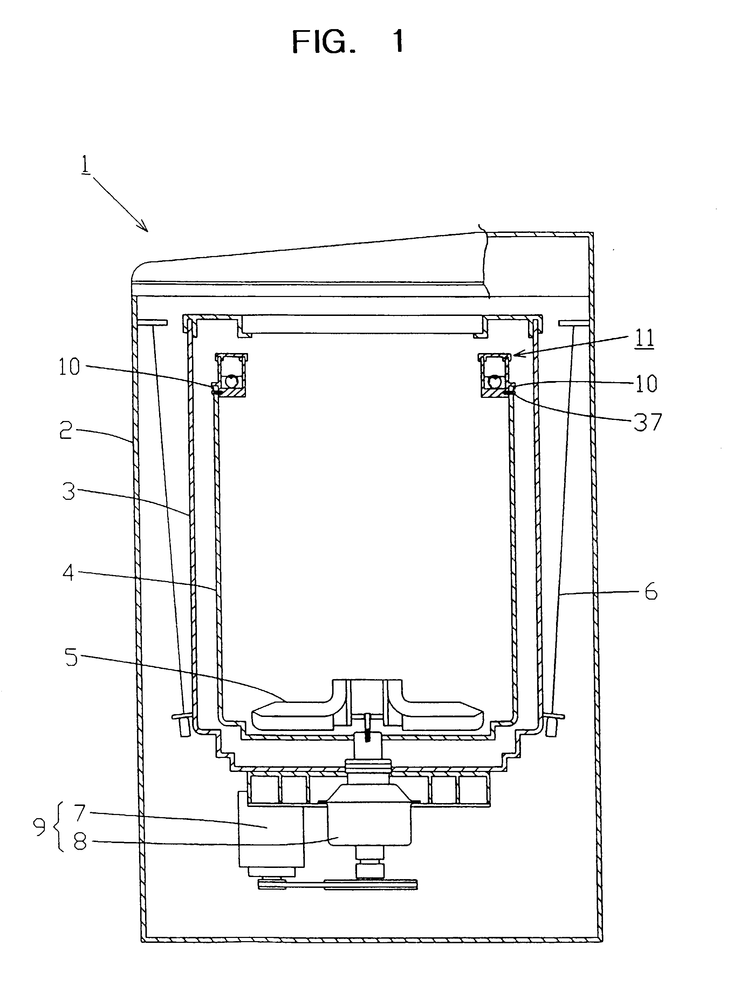

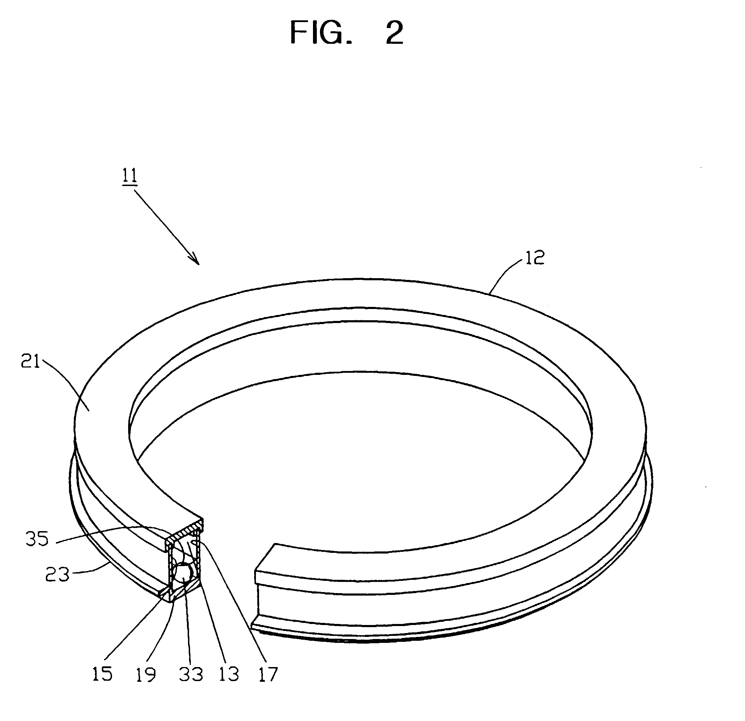

Referring to Figs. 1 and 2, a ball balancer 11 includes an annular casing 12 having an annular chamber 13 containing a multiplicity of balancing balls 33 and a damping fluid 35. The balancing balls 33 are made of steel and are free to move along the chamber 13 in a sufficient amount of damping fluid 35 to ensure that the balancing balls are completely immersed. Oil having a predetermined viscosity is generally used for the damping fluid 35. The damping fluid 35 limits the movement of the balancing balls 33 with respect to the casing 12 until the rotational speed of the casing 12 reaches a predetermined value. This ensures that vibration generated due to collision between the balancing balls 33 is prevented.

The ball balancer 11 is mounted concentrically on an upper portion of the inner wall of a spin basket 4 of a washing machine 1. When the spin basket 4 rotates with an unbalanced load of laundry the balancing balls 33 in the chamber 13 move to oppose and counteract the imbalance so that the spin basket 4 is able to rotate without generating vibration or abnormal noise.

The vibration damping effect of a ball balancer 11 is significantly affected by the characteristics of the balancing balls 33 and the damping fluid 35. As the viscosity of the damping fluid 35 increases, movement of the balancing balls 33 inside the casing 12 becomes limited and effectively prevents them from colliding into each other. However, an increase is viscosity also obstructs prompt movement of the balancing balls 33, so that the vibration damping effect of the ball balancer 11 is decreased.

It is difficult to maintain the damping fluid 35 at a costant viscosity as it varies depending on external temperature and heat generated by friction between the balancing balls 33. Therefore, collision between the balancing balls 33 cannot be prevented at all times and the vibration damping effect of the ball balancer cannot be maintained.

Further, abrasion of the balancing balls 33 within the chamber may occur reducing the efficiency of the balancing device.

It is an object of the present invention to overcome or substantially alleviate the aforementioned problems.

A balancing device according to the present invention is characterised in that the damping fluid contains an additive for reducing temperature dependent fluid variations in the predetermined viscosity of the damping fluid.

Preferably, the balancing device is of the ball type and comprises an annular casing installed at the rotative body coaxially therewith and having an annular chamber therein, and a multiplicity of balancing balls movably contained in the chamber of the casing, the damping fluid being contained in the chamber of the casing.

In a preferred embodiment, the additive is a synthetic polymer or copolymer and, preferably is of a high molecular weight. Conveniently, said second polymer or copolymer is a polyolefin. Preferably, the additive is one selected from the group consisting of polyalkylmethacrylate, polyisobutylene, polyalkylstyrene and ethylene propylene copolymer.

More preferably, the damping fluid includes an antioxidant and an anticorrosive. To effectively accomplish the above objects, the viscosity of the damping fluid is preferably within 200-2000cSt and more preferably 200-400cSt.

Embodiments of the present invention will now be described by way of example only, with reference to the accompanying drawings in which:
Figure 1 shows a section of a washing machine employing a ball balancer according to a preferred embodiment of the present invention;
Figure 2 shows a partially cut out perspective view of the ball balancer of Figure 1;
Figures 3 and 4 are diagrams for explaining the states of a high molecular substance of a chain type in a damping fluid at a normal temperature and a high temperature, respectively;
Figure 5 is a graph showing the relationship between the viscosity of the damping fluid and noises of the ball balancer; and
Figure 6 is a graph showing the relationship between the viscosity of the damping fluid and vibrations of a spin basket.

Referring to Figure 1, a washing machine 1 employing a ball balancer 11 according to a preferred embodiment of the present invention includes an external cabinet 2, a tub 3 suspended inside the external cabinet 2 by a suspension unit 6 and a spin basket 4 mounted for rotation within the tub 3 to contain the laundry. The external cabinet 2 is rectangular in shape, and the tub 3 and spin basket 4 are cylindrical in shape, respectively. The surface of the spin basket 4 has a multiplicity of holes (not shown) through which water may pass between the tub 3 and the spin basket 4. A pulsator 5 is mounted on the bottom of the spin basket 4 to generate a spiral flow of water.

A power transmission unit 9 having a driving motor 7 and a shaft assembly 8 is mounted beneath the tub 3 and is surrounded by a saddle (not shown). The power transmission unit 9 rotatably drives the spin basket 4 or the pulsator 9 selectively in a forward or reverse direction, according to a program stored in a controller (not shown). Accordingly, washing, rinsing and spin-drying operations are performed.

An annular flange 10 is formed around the upper outer circumferential edge of the spin basket 4 and supports the ball balancer 11, on a supporting rib 23 (to be described later) formed on the ball balancer 11.

As shown in Figure 2, the ball balancer 11 has an annular casing 12 mounted coaxially with the spin basket 4 and having a chamber 13. The casing 12 has an outer wall member 15, an inner wall member 17, a bottom member 19 and a covering member 21. The outer and inner wall members 15 and 17 and the bottom member 19 are integrally formed, and the covering member 21 covers a space formed by the outer and inner wall members 15 and 17 and the bottom member 19 to form the chamber 13.

A multiplicity of balancing balls 33 and a damping fluid 35 are contained in the chamber 13 of the casing 12 for movement therein. The balancing balls 33 and the damping fluid 35 are placed in the casing 12 before attaching covering member 21.

The casing 12 is preferably made of plastics, for example, ABS (Acrylonytrile-Butadiene-styrene) suitable for absorbing vibrations and noises generated during rotation of the spin basket 4. ABS has a superior insulating characteristic, and prevents electrochemical corrosion which may occur as a result of contact between the casing 12 and the balancing balls 33 and electrolytic abrasion which may be generated as a result of agitation of the damping fluid 35 inside the casing 12. The ABS also has a thermal insulating characteristic with respect to an external temperature change.

The balancing balls 33 are preferably made of chrome steel, which has superior anticorrosive and antiabrasive characteristics. The diameter of the balancing balls depends upon the width of the chamber 13 and is preferably greater than half the width of the chamber 13.

The damping fluid 35 prevents the balancing balls 33 from moving freely inside the chamber 13 and pressing against the outer wall member 15 of the casing 12 by a centrifugal force generated by the rotation of the spin basket 4. Any mineral oil or a silicon oil may be used as damping fluid 35 and preferably has a viscosity of 200-2000cSt, or more preferably 200-400cSt. The reason for the viscosity range will be described later.

The chamber 13 is not filled completely with damping fluid so that the balancing balls 33 are partially exposed. In practice, the amount of the damping fluid 35 is 1/4-3/4 of the volume of the chamber 13 of the casing 12. An additive is contained in the damping fluid 35 to reduce its viscosity variation caused by changes in temperature. The additive is a high molecular substance of a chain type, and is preferably polyalkylmethacrylate in the present embodiment.

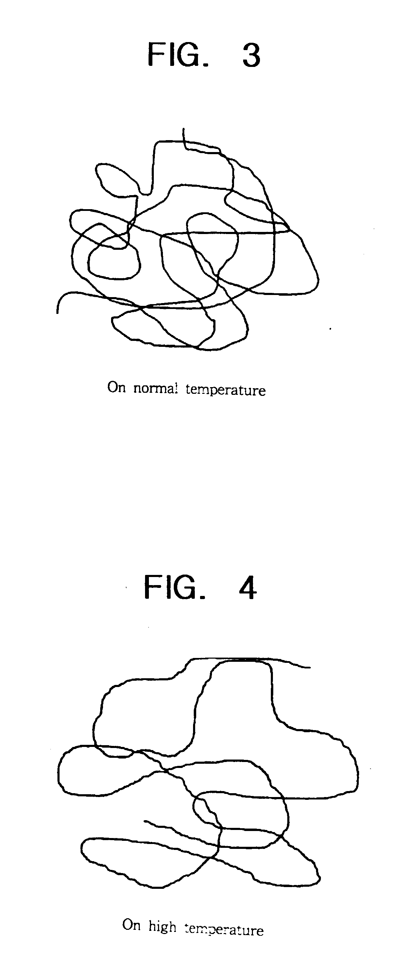

Hereinafter, the function and effect of the additive will be described with reference to Figures 3 and 4.

As shown in Figure 3, the damping fluid 35 consisting of only the mineral or silicon oil maintains its viscosity at a normal temperature and the movement of the balancing balls 33 is limited by the viscosity of the damping fluid 35. However, if the temperature increases above the pour point of the damping fluid 35, the damping fluid 35 decomposes as shown in Figure 4 and accordingly the viscosity thereof decreases. In this state, the balancing balls 33 freely move inside the casing 12 during the rotation of the spin basket 4, and vibration and noise is generated due to collisions between the balancing balls 33.

The additive functions to prevent the decomposition and viscosity decrease of the damping fluid 35. Since the damping fluid 35 contains the additive having the chain type structure, the pour point of the damping fluid 35 is increased. Accordingly, the viscosity maintenance force of the damping fluid 35 is increased to maintain the state as shown in Figure 3, so that the collision between balancing balls 33 due the free movement thereof inside the casing 12 is prevented.

The damping fluid 35 further includes an antioxidant and an anticorrosive. The antioxidant functions to prevent the damping fluid 35 from converting into a compound having low-carbonic molecules and the anticorrosive functions to prevent corrosion of the balancing balls 33.

The supporting rib 23 protrudes outwardly from the outer wall member 15 of the casing 12 as shown in Figure 2 and contacts with the flange 10 of the spin basket 4. The bottom member 21 of the casing 12 and the upper portion of the spin basket 4 are combined by a fastening means such as a screw 37, so that the casing 12 is mounted on the upper inner circumferential edge of the spin basket 4.

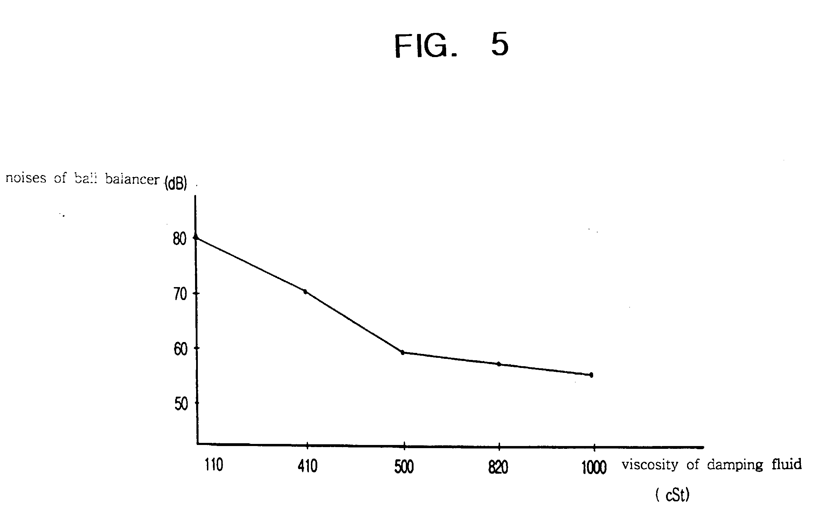

Referring to Figure 5 which shows the relationship between the viscosity of the damping fluid 35 and noise of the ball balancer 11, it can be appreciated that the noises of the ball balancer 11 decreases, as the viscosity of the damping fluid 35 is increased. For example, when the viscosity of the damping fluid 35 is 110cSt, the noise level is 80db, whereas when the viscosity is 500cSt, the noise level is 60db. It can be seen that the noise decreases as the viscosity increases.

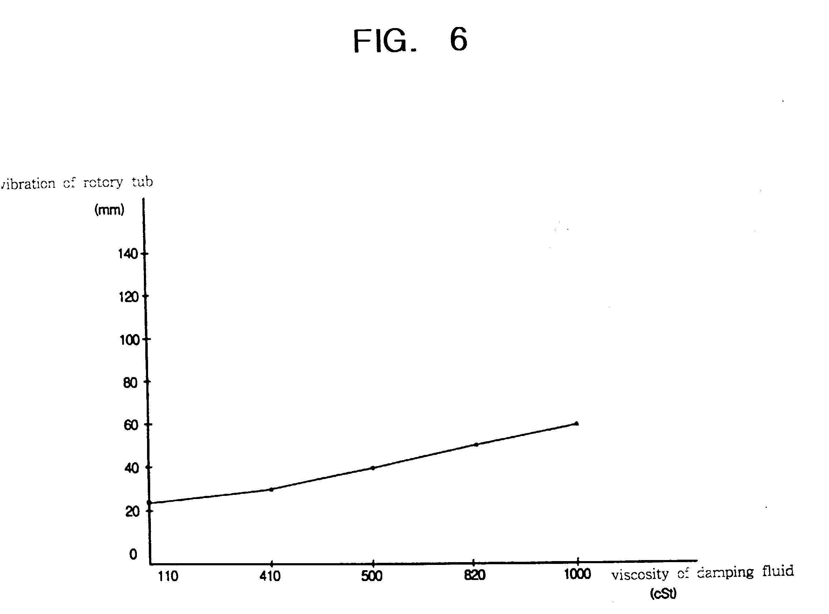

Referring to Figure 6 which shows the relationship between the viscosity of the damping fluid 35 and the vibration of the spin basket 4, it can be seen that the vibrations of the spin basket 4 increases as the viscosity of the damping fluid 35 increases. For example, when the viscosity is 410cSt, the vibration level is approximately 30mm, while when the viscosity is 1000cSt, the vibration level is above 60mm.

In view of the foregoing, the viscosity of the damping fluid 35 is preferably above 200cSt, in order to obtain an appropriate vibration damping effect. However, it is preferable that the viscosity of the damping fluid 35 does not exceed 2000cSt, since the ball balancer 11 can scarcely perform its vibration damping function when the vibration level of the spin basket 4 reaches 80mm and above. Therefore, it is preferable that the viscosity of the damping fluid 35 is approximately within 200-2000cSt.

More preferably, the viscosity of the damping fluid 35 is approximately within 200-400cSt, considering that it is desirable to maintain the vibration level of the spin basket at 30mm or below.

Since the viscosity variation of the damping fluid 35 due to temperature change is very small, vibration and noise of the spin basket 4 due to free movement of the balancing balls 33 can be decreased, especially at an initial stage of the spin drying operation or during washing and rinsing operations when the spin basket 4 rotates at a speed lower than its resonant rotational rate.

When the spin basket 4 rotates at a high speed, that is, at a speed higher than its resonant rotational rate, the balancing balls 33 move to a counterbalance position opposite to the imbalance load of laundry. Heat may be generated as a result of friction between the balancing balls and damping fluid 33 and 35 and the casing 12 and transferred to the damping fluid 35. However, the viscosity of the damping fluid 35 can maintain a nearly constant level by the additive contained therein.

Further, the lifetime of the balancing balls 33 and the damping fluid 35 can be increased by the antioxidant and the anticorrosive, so that replacement and maintenance of the ball balancer 11 becomes unnecessary.

In alternative embodiments, polyisobutylene, polyalkylstyrene or ethylene propylene copolymer in lieu of the polyalkylmethacrylate may be used for the additive.

The ball balancer according to the present invention can be used for a variety of rotary bodies including a spin basket 4 of a washing machine 1.

As described above, a ball balancer according to the preferred embodiment of the present invention employs a damping fluid in which variation in the viscosity thereof due to a temperature change is small, so that vibrations of the rotative body are effectively decreased. Also, an antioxidant and an anticorrosive are contained in the damping fluid to increase the lifetime of the balancing balls and the damping fluid.

## Claims

1. A balancing device for compensating for imbalanced rotation of a rotary body (4) comprising an annular chamber (13) fixed relative to the body (4) concentric therewith and counterbalance means (33) arranged to move in the chamber (13) in a damping fluid (35) having a predetermined viscosity, towards a counterbalancing position in response to imbalanced rotation of the body (4), **characterised in that** the damping fluid (35) contains an additive for reducing temperature dependent variations in the predetermined viscosity of the damping fluid (33).

2. A device according-to claim 1, wherein said additive is a synthetic polymer or copolymer, preferably of high molecular weight.

3. A device according to claim 2, wherein said synthetic polymer or copolymer is a polyolefin.

4. A device according to claim 3, wherein said polyolefin is selected from the group consisting of polyalkylmethacrylate, polyisobutylene, polyalkylstyrene and ethylene-propylene copolymer.

5. A ball balancer for a rotative body comprising an annular casing installed at the rotative body coaxially therewith and having an annular chamber therein; a multiplicity of balancing balls movably contained in said chamber of said casing; and a damping fluid contained in said chamber of said casing, wherein said damping fluid includes an additive having a high molecular substance of a chain type for decreasing a viscosity variation of said damping fluid due to a temperature change.

6. A ball balancer as claimed in claim 5, wherein said additive is one selected from the group consisting of polyalkylmethacrylate, polyisobutylene, polyalkylstyrene and ethylene propylene copolymer.

7. A ball balancer as claimed in claim 6, wherein said damping fluid further includes an antioxidant.

8. A ball balancer as claimed in claim 6, wherein said damping fluid further includes an anticorrosive.

9. A ball balancer as claimed in claim 5 wherein the viscosity of said damping fluid is within 200-2000cSt.

10. A ball balancer as claimed in claim 9, wherein the viscosity of said damping fluid is within 200-400cSt.
